(19) Europäisches Patentamt
European Patent Office
Office européen des brevets

(11) EP 0 899 896 A1

(12) **EUROPÄISCHE PATENTANMELDUNG**

(43) Veröffentlichungstag:
03.03.1999 Patentblatt 1999/09

(51) Int. Cl.⁶: $H04B\ 7/08$, $H04B\ 7/005$, $H01Q\ 3/26$

(21) Anmeldenummer: 98115094.9

(22) Anmeldetag: 11.08.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 27.08.1997 DE 19737365

(71) Anmelder:
SIEMENS AKTIENGESELLSCHAFT
80333 München (DE)

(72) Erfinder: Farsakh, Christof, Dr.
80799 München (DE)

(54) **Verfahren und Einrichtung zur Schätzung räumlicher Parameter von Überstragungskanälen**

(57) Beim erfindungsgemäßen Verfahren zur Schätzung räumlicher Parameter eines Übertragungskanals zwischen Funkstationen in Kommunikationssystemen wird davon ausgegangen, daß einer Funkstation eine aus mehreren Einzelstrahlern bestehende Antenneneinrichtung zugeordnet ist. Mit Hilfe dieser Einzelstrahler werden Abtastwerte eines Empfangssignals bestimmt, aus denen eine Empfangsmatrix gebildet wird. Durch Matrizenmultiplikation der Empfangsmatrix mit der konjugiert komplexen transponierten Empfangsmatrix wird ein Schätzwert für die räumliche Kovarianzmatrix des Übertragungskanals bestimmt. Sind mehrere Verbindungen gleichzeitig aktiv, werden aus den Abtastwerten verbindungsindividuelle Kanalimpulsantworten (basierend auf Trainingssequenzen oder Schätzwerten für die übertragenen Daten) ermittelt, die zur Bestimmung der verbindungsindividuellen räumlichen Kovarianzmatrizen verwendet werden.

Fig.2

EP 0 899 896 A1

**Beschreibung**

Die Erfindung betrifft ein Verfahren und eine Einrichtung zur Schätzung räumlicher Parameter von Übertragungskanälen für Verbindungen zwischen Funkstationen in Kommunikationssystemen, insbesondere in Mobilfunknetzen mit räumlicher Teilnehmerseparierung.

In Kommunikationssystemen, beispielsweise Mobilfunknetzen oder Systemen des drahtlosen Teilnehmeranschlusses sind Verfahren der räumlichen Teilnehmerseparierung beispielsweise aus DE 197 13 666 bekannt. In solchen SDMA (space division multiple access) Systemen können mehrere Kommunikationsverbindungen in einem gemeinsamen Kanal versorgt werden, wobei der Kanal in FDMA/TDMA-Systemen (frequency/time division multiple access) durch ein Frequenzband und einen Zeitschlitz beschrieben wird. Dazu werden sendeseitig, z.B. in Basisstationen von Mobilfunknetzen, adaptive Antennen eingesetzt. Durch diese adaptive Antennen können durch Strahlformung mehrere auf die jeweiligen Position der empfangenden Funkstation, z.B. Mobilstationen von Mobilfunknetzen, abgestimmte Abstrahlrungskeulen geformt werden. Durch diese voneinander unabhängigen Abstrahlungskeulen erfolgt die räumliche Auflösung, die zur Separierung von Teilnehmersignalen benutzt wird.

Die Übertragungsstrecke von einer Basisstation zu einer Mobilstation wird als Abwärtsstrecke und die Übertragungsstrecke von einer Mobilstation zu einer Basisstation wird als Aufwärtsstrecke bezeichnet. Die räumliche Teilnehmerseparierung durch Strahlformung kommt auf besonders vorteilhafte Weise bei der Abwärtsstrecke zum Einsatz, da aus Kostengründen bevorzugt nur die Basisstation mit einer aus mehreren Einzelsensoren bestehende Antenneneinrichtung versehen ist.

Eine räumliche Teilnehmerseparierung bringt einen Kapazitätsgewinn in Mobil-Kommunikationssystemen mit sich, da zusätzlich zu anderen Teilnehmerseparierungsverfahren TDMA, FDMA oder CDMA bei gleichbleibender benötigter Bandbreite eine größere Zahl von Kommunikationsverbindungen versorgt werden kann.

In Kommunikationssystemen mit SDMA-Teilnehmerseparierung tritt weiterhin das Problem auf, für eine - durch Verbindungsaufbau oder durch eine Übergabeprozedur von einer Nachbarzelle - hinzukommende Verbindung einen geeigneten Kanal auszuwählen. Dazu muß beurteilt werden, ob und inwieweit mehrere im selben Kanal operierende Teilnehmer durch Strahlformung räumlich trennbar sind, d.h. ob beispielsweise ihre dominanten Einfallsrichtungen nicht zu nahe beieinander liegen.

Sowohl zur Beurteilung der räumlichen Trennbarkeit mehrerer Teilnehmerverbindungen, als auch für die Berechnung und Aktualisierung der Strahlformungskoeffizienten nach der Kanalzuweisung werden Schätzwerte über räumliche Parameter der Übertragungskanäle zwischen den Teilnehmern und der Basisstation benötigt. Eine Möglichkeit, räumliche Übertragungskanäle zu modellieren, ist dadurch gegeben, die Existenz einer endlichen Anzahl diskreter Ausbreitungspfade zwischen Mobil- und Basisstation zu postulieren. Die entsprechenden räumlichen Parameter sind neben der Pfadanzahl durch die Einfallsrichtungen und komplexwertigen Übertragungsfaktoren jedes Pfads gegeben. Ein Verfahren zur Schätzung dieser Parameter ist aus DE 195 11 752 bekannt; weitere Algorithmen dieser Art sind in der einschlägigen Literatur unter den Namen MUSIC, ESPRIT und Unitary ESPRIT zu finden.

Die genannten Verfahren sind jedoch mit hohem Rechenaufwand und großer Empfindlichkeit gegen Antennenfehler verbunden und versagen vollständig in räumlich diffusen Szenarien, die nicht mehr durch eine endliche Anzahl diskreter Ausbreitungspfade, sondern nur mehr durch ein kontinuierliches Einfallsspektrum beschreibbar sind.

Daher liegt der Erfindung die Aufgabe zugrunde, ein mit geringerem rechentechnischen Aufwand durchführbares Verfahren zur robusten und zuverlässigen Schätzung räumlicher Parameter von Übertragungskanälen anzugeben. Diese Aufgabe wird durch das Verfahren mit den Merkmalen des Patentanspruchs 1 und das Verfahren mit den Merkmalen des Patentanspruchs 4 gelöst. Weiterhin ist eine Einrichtung zur Durchführung der Verfahren angegeben. Vorteilhafte Weiterbildungen sind den Unteransprüchen zu entnehmen.

Beim erfindungsgemäßen Verfahren zur Schätzung räumlicher Parameter in Kommunikationssystemen wird davon ausgegangen, daß sowohl für die Strahlformung, als auch die für die Beurteilung der räumlichen Trennbarkeit die teilnehmerspezifischen räumlichen Kovarianzmatrizen die entscheidenden räumlichen Parameter darstellen. Diese Matrizen lassen sich zwar berechnen, falls die teilnehmerspezifischen Einfallsrichtungen und Pfaddämpfungen bekannt sind, das Ziel der erfindungsgemäßen Verfahrens ist jedoch die direkte Berechnung dieser Matrizen aus den an der Basisstation in der Aufwärtsrichtung gemessenen Abtastwerten ohne den aufwendigen und modellfehlerbehafteten Umweg über die Richtungsschätzung einschlagen zu müssen.

Die Bestimmung der räumlichen Kovarianzmatrizen für die Abwärtsstrecke aus den Empfangsdaten in der Aufwärtsstrecke basiert auf der Erkenntnis, daß in den meisten gängigen Mobilfunksystemen gilt, daß sich bei entsprechender zeitlicher Mittelung diese Matrizen in Auf- und Abwärtsstrecke nur unwesentlich voneinander unterscheiden. Es sind keinerlei Modellannahmen über der Art der Einfallsspektren an der Basisstation (z.B. diskret / kontinuierlich, viele / wenige Einfallsrichtungen) nötig.

Diese Art der Bestimmung der relevanten räumlichen Parameter bildet die Grundlage für eine robuste Kanalzuweisung und Strahlformung einer Verbindung, die gegenüber kleinen Schätzfehlern nicht anfällig ist. Eventuelle Schätzfehler führen nur zu einer kontinuierlichen Performance-Verschlechterung (graceful degradation) und nicht zu abrupten Zusammenbrüchen der Strahlformung. Dies ist in einer Mobilfunkumgebung für die praktische Realisierung besonders wichtig.

Nach dem Verfahren werden räumliche Parameter auf direktem Wege, ohne aufwendige Richtungsschätzung gewonnen. Kann in solchen Kommunikationssystemen eine räumliche Reziprozität in beiden Übertragungsrichtungen angenommen werden, so werden mit Hilfe der räumlichen Parameter Steuersignale für die umgekehrte Übertragungsrichtung erzeugt. Liegt zwischen beiden Übertragungsrichtungen ein Frequenzversatz und unterscheiden sich die Gruppenantworten in den beiden Frequenzbändern nur gering, so ist dies ebenfalls möglich. Bei größeren Abweichungen ist eine Modifizierung der räumlichen Parameter nötig.

Zur Ausführung des erfindungsgemäßen Verfahrens wird bevorzugt eine Empfangsmatrix aus einer beliebig festlegbaren Anzahl von Abtastwerten gebildet, die an den Einzelsensoren der Basisstation gemessenen werden und von Signalen stammen, die von einem oder mehreren Mobilgeräten abgestrahlt wurden.

In einer speziellen Ausführungsform des Verfahrens, das besonders dann vorteilhaft ist, wenn nur ein einziger Teilnehmer sendet, wird die zu schätzende räumliche Kovarianzmatrix auf einfache Weise durch Multiplikation der Empfangsmatrix mit ihrer konjugiert komplex Transponierten bestimmt.

Ist die Sendeleistung in der Aufwärtsstrecke dieses Teilnehmers (bzw. ein Schätzwert dafür) bekannt, so ist es zweckmäßig, die so erhaltenene räumliche Kovarianzmatrix durch Division durch diese Sendeleistung zu normieren.

Durch Anpassung der Anzahl der Abtastwerte an die Zeitvarianz des Kanals kann die Schätzung der Kovarianzmatrix auf vorteilhafte Weise optimiert werden. Bei Erhöhung der Anzahl verbessert sich die Reaktion auf schnelle Kanalveränderungen, bei Erniedrigung verbessern sich die Mittelungseigenschaften über den schnellen Schwund, so daß kurzzeitige Störungen des Übertragungskanals besser ausgeglichen werden.

Es ist besonders vorteilhaft, die Empfangsmatrizen abschnittsweise für mehrere Zeitpunkte zu bilden und die Schätzwerte mehrerer Zeitpunkte zu einer gemeinsamen Kovarianzmatrix zu überlagern. Damit wird jede Bestimmung der räumlichen Parameter durch bereits vorliegende Erfahrungswerte aus der vorherigen Bestimmung stabilisiert und damit zuverlässiger gemacht.

Auch in diesem Fall kann es vorteilhaft sein, wenn die Anzahl der zu mittelnden Schätzwerte und deren Gewichtung den Kanalübertragungsverhältnissen entsprechend einstellbar ist.

In einer weiteren Ausgestaltung der Erfindung können bei der Überlagerung der Schätzwerte mehrerer Zeitpunkte die jeweils älteren Schätzwerte mit einem Vergessensfaktor multipliziert werden, so daß die aktuelle Schätzung höher bewertet wird als vergangene Schätzungen.

Durch Anpassung des Vergessensfaktors an die Zeitvarianz des Kanals kann die Schätzung der Kovarianzmatrix auf vorteilhafte Weise optimiert werden. Bei Erhöhung des Vergessensfaktors verbessert sich die Reaktion auch auf schnelle Kanalveränderungen, bei Erniedrigung verbessern sich die Mittelungseigenschaften des Verfahrens.

In einer speziellen Ausführungsform des Verfahrens, das besonders dann vorteilhaft ist, wenn mehrere Teilnehmer im gleichen Kanal mit der Basisstation kommunizieren, wird die zu schätzende räumliche Kovarianzmatrix eines bestimmten Teilnehmers einfach durch Multiplikation der zu diesem Teilnehmer gehörigen Kanalimpulsantwortmatrix mit ihrer konjugiert komplexen Transponierten bestimmt.

Ist die Sendeleistung in der Aufwärtsstrecke dieses Teilnehmers (bzw. ein Schätzwert dafür) bekannt, so kann es auch hier zweckmäßig sein, die so erhaltenene räumliche Kovarianzmatrix durch Division durch diese Sendeleistung zu normieren.

Gemäß einer vorteilhaften Ausprägung der Erfindung senden die Teilnehmer in der Aufwärtsstrecke a-priori bekannte Symbole (z.B. Trainingssequenzen als Mittambel oder in Pilotkanälen oder -paketen), die jedoch für die beteiligten Teilnehmer verschieden sein müssen. Dadurch können die Kanalimpulsantwortmatrizen aller im gleichen Kanal sendenden Teilnehmer gleichzeitig geschätzt werden.

Alternativ dazu ist es möglich, daß alle von den Teilnehmern gesendeten Symbole zur Ermittlung der Kanalimpulsantwortmatrizen verwendet werden, nicht ausschließlich die a-priori bekannten Symbole. Dies ist selbstverständlich erst nach einer auf den Empfangssignalen operierenden Datendetektion möglich, die Schätzwerte für die übertragenen Daten liefert.

Die erste Variante ist weniger rechenintensiv und kann ggf. parallel zur Datendetektion ausgeführt werden, so daß die Gesamtverzögerungszeit des Systems abnimmt. Auf der anderen Seite bietet die zweite Variante den Vorteil, daß solange eine einigermaßen zuverlässige Datendetektion in der Aufwärtsstrecke gegeben ist, was für die Stabilität des Kommunikationssystems ohnehin eine notwendige Voraussetzung darstellt, wesentlich mehr Vorwissen in die Schätzung der teilnehmerindividuellen Kanalimpulsantwortmatrizen bzw. räumlichen Kovarianzmatrizen einzubringen. Dadurch werden zwangsläufig bessere Schätzergebnisse erzielt als in der ersten Variante.

Die Stabilisierung, Mittelung und Aktualisierung der geschätzten teilnehmerindividuellen räumlichen Kovarianzmatrizen kann bei mehreren Teilnehmern auf analoge Weise vorgenommen werden, wie für den Fall eines einzigen Teilnehmers beschrieben worden ist.

Die räumliche Kovarianzmatrix C und die Kanalimpulsantwortmatrix H werden vorteilhafterweise in Form von Matrizen der Dimension M x M (M gleich Anzahl der Einzelstrahler) bzw. der Dimension M x V (V gleich Länge der Kanalimpulsantwort) dargestellt. Die Kanalimpulsantwortmatrix H enthält die Kanalimpulsantworten der Kanäle zwischen M Einzelstrahlern und der Position der Mobilstation. Damit läßt sich jeder Kanal unabhängig von diskreten Einfallsrichtungen beschreiben und auch räumlich diffuse Einfallsszenarios sind problemlos darstellbar. Das Modell der Existenz einer endlichen Anzahl richtungsbezogener Kanalimpulsantworten wird somit erweitert, so daß auch für eine große Anzahl von Teilwellen und Einfallsrichtungen eine sinnvolle Parameterschätzung möglich ist. Auch bei Anschattungen ohne starke direkte Einfallsrichtung arbeitet die Bestimmung der räumlichen Parameter zuverlässig, da die Bestimmung direkt auf den Empfangssignalen basiert und ohne Richtungsschätzung auskommt.

Durch das erfindungsgemäße Verfahren läßt sie auch bei Antenneneinrichtungen mit wenigen Einzelstrahlern eine zuverlässige Parameterbestimmung durchführen. Die Einfachheit der zur Durchführung des erfindungsgemäßen Verfahren nötigen Rechenschritte führt auf der anderen Seite auch bei der Verwendung einer hohen Anzahl von Einzelstrahlern nur zu geringen Verzögerungszeiten, wodurch die Strahlformung in umgekehrter Übertragungsrichtung wesentlich vereinfacht wird.

Die Erfindung wird im folgenden anhand von Ausführungsbeispielen bezugnehmend auf zeichnerische Darstellungen näher erläutert.

Dabei zeigen:

Fig. 1       eine schematische Darstellung eines Mobil-Kommunikationssystems,

Fig. 2       eine schematische Darstellung eines Strahlformungsnetzwerks,

Fig. 3       eine schematische Darstellung einer Funkstation,

Fig. 4       ein Ablaufdiagramm eines ersten Ausführungsbeispiels,

Fig. 5       ein Ablaufdiagramm eines zweiten Ausführungsbeispiels, und

Fig. 6       ein Ablaufdiagramm eines dritten Ausführungsbeispiels.

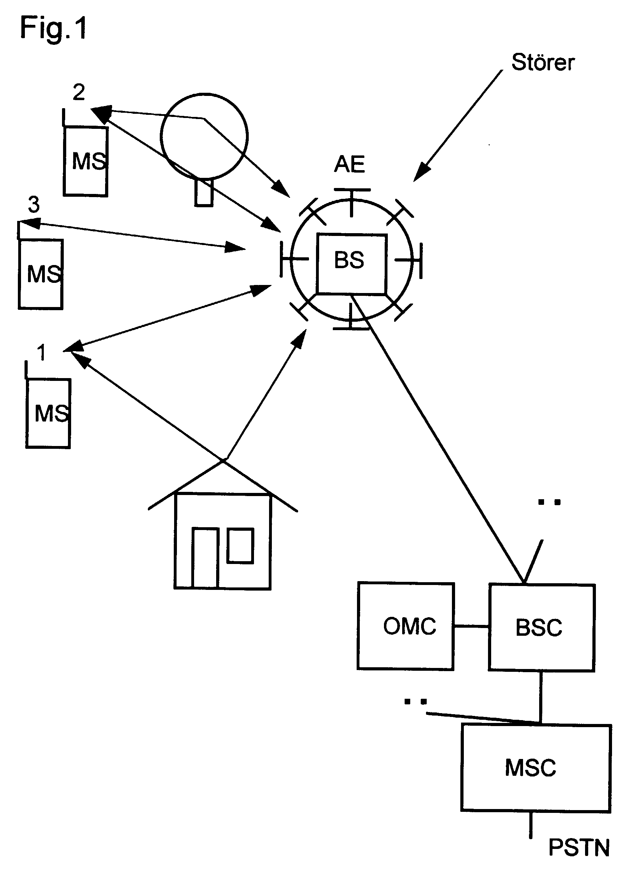

Das in FIG 1 dargestellte Mobil-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobil-Vermittlungsstellen MSC mit jeweils zumindest einem Basisstationscontroller BSC verbunden. Jeder Basisstationscontroller BSC ermöglicht wiederum eine Verbindung zu zumindest einer Basisstation BS - der Zentralstation. Eine solche Basisstation BS ist eine Funkstation, die über eine Funkschnittstelle eine Verbindung zu Mobilstationen MS - der Teilnehmerstation - aufbauen kann.

In FIG 1 sind beispielhaft drei Funkverbindungen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Die Funktionaliät dieser Struktur ist auf andere Mobilfunknetze oder Einrichtungen zum drahtlosen Teilnehmeranschluß (d.h. die Gegenstellen der Basisstation sind stationär) übertragbar, in denen die Erfindung zum Einsatz kommen kann.

Die Verbindungen zwischen der Basisstation BS und den Mobilstationen MS unterliegen einer Mehrwegeausbreitung, die durch Reflexionen beispielsweise an Gebäuden oder Bepflanzungen zusätzlich zum direkten Ausbreitungsweg hervorgerufen werden. Geht man von einer Bewegung der Mobilstationen MS aus, dann führt die Mehrwegeausbreitung zusammen mit Einflüssen von Störern dazu, daß bei der empfangenden Basisstation BS sich die Signalkomponenten der verschiedenen Ausbreitungswege eines Teilnehmersignals zeitabhängig überlagern. Weiterhin wird davon ausgegangen, daß sich die Teilnehmersignale verschiedener Mobilstationen MS am Empfangsort zu einem Empfangssignal überlagern.

Zur in Fig. 1 dargestellten Basisstation BS ist eine Antenneneinrichtung AE mit acht Einzelstrahlern zugehörig, die eine adaptive Antenne bilden. Durch eine Strahlformung in der Basisstation BS wird eine räumliche Teilnehmerseparierung durchgeführt. Die Strahlformung wird für die Abwärtsrichtung durchgeführt. Bei der Aufwärtsrichtung kommen andere Auswerteverfahren zum Einsatz.

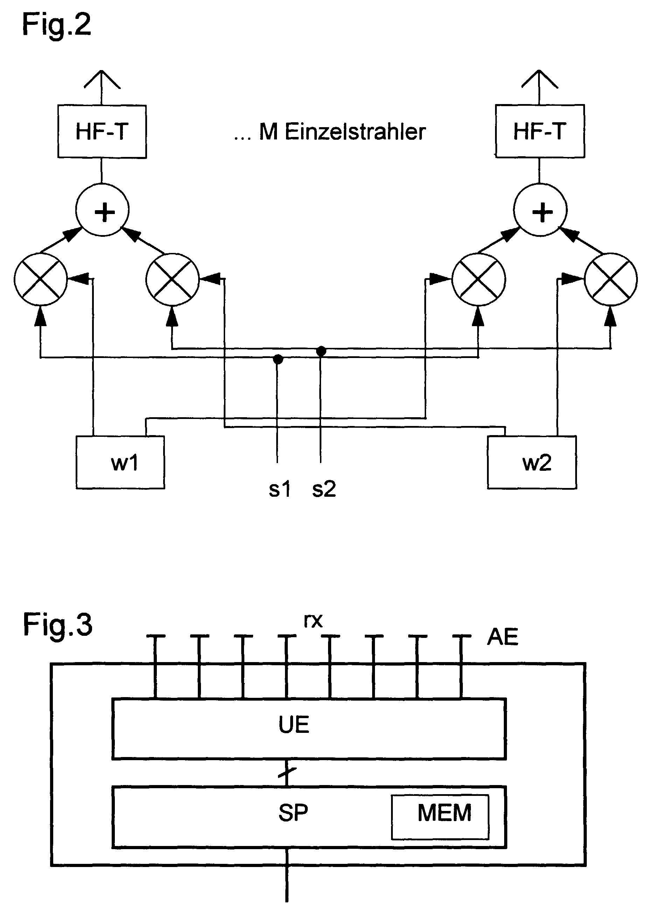

Ein Netzwerk zur Strahlformung ist in Fig. 2 beispielhaft für zwei Verbindungen mit Sendesignalen s1 und s2 gezeigt. Den Verbindungen sind Gewichtsvektoren w1 und w2 zugeordnet, die mit den Sendesignalen s1 und s2 multipliziert werden, wobei für jeden Einzelstrahler die gewichteten Sendesignale s1 und s2 überlagert, in einem HF-Teil HF-T in hochfrequente Sendesignale umgewandelt und anschließend über M Einzelstrahler abgestrahlt werden. Die Sendesignale s1 und s2 werden im gleichen Frequenzkanal (gleiche Sendefrequenz, ggf. Zeitschlitz und/oder Code) übertragen und werden lediglich räumlich separiert.

Durch die Anwendung verschiedener Gewichtsvektoren w1, w2 für die unterschiedlichen Verbindungen wird eine Abstrahlungscharakteristik der Antenneneinrichtung AE erzeugt, die einen ungestörten Empfang der Sendesignale s1, s2 an den entsprechenden Positionen der Mobilstationen MS gewährleistet. Vorraussetzung für die Einstellung der Gewichtsvektoren w1, w2 ist eine Bestimmung von räumlichen Parametern bezüglich der Übertragungskanäle der einzelnen Verbindungen.

Eine räumliche Separierung von Verbindungen durch Strahlformung scheitert, wenn die Übertragungskanäle der einzelnen Verbindungen nicht ausreichend räumlich trennbar sind, d.h. wenn die Haupteinfallsrichtungen der von ihnen produzierten Signale an der Basisstation BS zu nahe beieinander liegen. Zur quantitativen Beurteilung der „räumlichen Trennbarkeit" werden Informationen über die räumlichen Kanalbedingungen der Signale und dazugehörige Pfaddämpfungen benötigt. Dasselbe gilt für die Bestimmung günstiger Gewichtsvektoren $w_1, .., w_k$, durch welche die räumliche Separierung der einzelnen Verbindungen in der Abwärtsstrecke gewährleistet werden kann. Die räumlichen Parameter lassen sich in Form von räumlichen Kovarianzmatrizen C darstellen.

Eine sehr allgemeine Art, die Aufwärtsstrecke eines Übertragungskanals in Aufwärtsstrecke zu beschreiben, ist durch die über den schnellen Schwund (fast fading) gemittelte räumliche Einfallsleistungsdichte $A_k(\psi,\theta)$ gegeben, wobei der Azimuthwinkel mit $\psi$ und der Elevationswinkel mit $\theta$ bezeichnet ist. Eine Gesamtübertragungdämpfung $\rho_k$, der logarithmische Quotient zwischen Sendeleistung an der Mobilstation MS des Teilnehmers k und der daraus resultierenden Empfangsleistung an jedem Einzelstrahler der Basisstation BS, läßt sich durch folgenden Zusammenhang aus der Einfallsrichtungsdichte $A_k(\psi,\theta)$ ermitteln:

$$10^{\rho\, k/10\, dB} = \int_{-\pi}^{+\pi} \int_{-\pi/2}^{+\pi/2} A_k(\psi, \theta)\, d\theta\, d\psi \qquad (1)$$

Bei schmalbandiger Abwärtsstrahlformung, siehe Fig. 2, sind sowohl für die Beurteilung der räumlichen Trennbarkeit in der Abwärtsstrecke als auch für die Berechung der Gewichtsvektoren $w_1, .. w_K$ lediglich die über die schnellen Schwunderscheinungen gemittelten räumlichen Kovarianzmatrizen $C_1, .., C_K$ relevant. Die räumliche Kovarianzmatix $C_k$ dient der räumlichen Beschreibung der zum Teilnehmer k gehörigen Abwärtsstrecke, also des Übertragungskanals von der Basisstation BS zur Mobilstation MS. Ausreichende räumliche Reziprozität der Übertragungsrichtung ist hierbei angenommen. Die Frequenzen der Abwärts- und Aufwärtsstrecke sind zumindest in etwa identisch oder führen zu ähnlichen Ausbreitungsbedingungen, so daß Gruppenantworten in der Abwärtsstrecke in etwa gleich denen in der Aufwärtsstrecke sind.

Die räumliche Kovarianzmatix $C_k$ wird durch folgende Gleichung beschrieben:

$$C_k = \int_{-\pi}^{+\pi} \int_{-\pi/2}^{+\pi/2} A_k(\psi, \theta)\, a(\psi, \theta)\, a^H(\psi, \theta)\, d\theta\, d\psi \qquad (2)$$

Dabei bezeichnet $a(\varphi,\theta)$ die Gruppenantwort der Antenneneinrichtung AE beim Empfang einer Wellenfront.

Die zum Stand der Technik gehörigen Lösungen stellten die räumliche Kovarianzmatix $C_k$ als auf Richtungsschätzungen basierende Summe einer diskreten Menge von Parametern und nicht als Integral dar. Die später geschilderte Bestimmung der räumlichen Kovarianzmatix C für die Abwärtsrichtung basiert auf Empfangswerten der Aufwärtsrichtung und wird ohne Richtungsschätzung und ohne eine Bestimmung räumlicher Einfallsdichten durchgeführt.

Fig. 3 zeigt eine Einrichtung, die diese Bestimmung der räumlichen Parametern vornimmt. Dazu werden Meßwerte der Einzelstrahler der Antenneneinrichtung AE bezüglich von Empfangssignalen rx in einer Übertragungseinrichtung UE ausgewertet. Nach einer Verstärkung, Basisbandübertragung und Analog/Digital-Wandlung stehen einer digitalen Signalverarbeitungseinrichtung SP digitalisierte Eingangswerte der Empfangssignale zur Verfügung. Diese Eingangswerte und weitere verbindungsindividuelle Parameter (Trainingssequenzen als a-priori Informationen), sowie Programme zur Durchführung der nachfolgenden Algorithmen sind in Speichermitteln MEM gespeichert. Die Einrichtung zur Bestimmung räumlicher Parameter ist in einer Basisstation BS angeordnet.

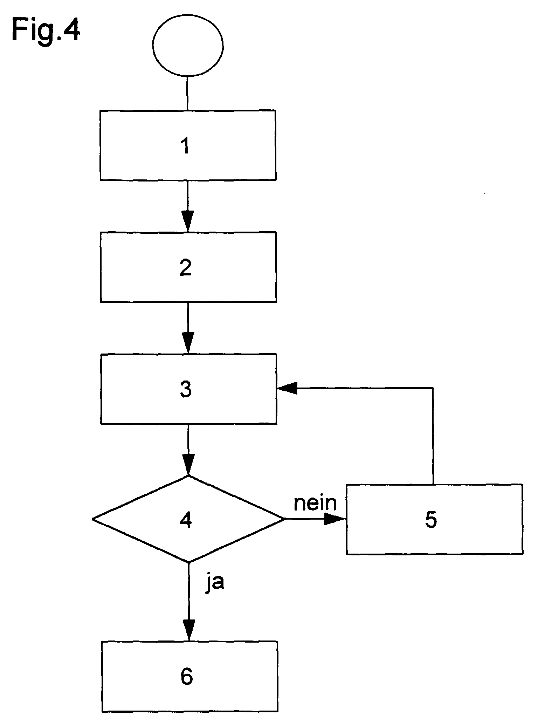

In Fig. 4 ist ein Programmablaufplan für ein erstes Ausführungsbeispiel gezeigt, das vor einer Zuweisung einer neuen Mobilstation MS zu einem Frequenzkanal durchgeführt wird. Die räumliche Koavarianzmatrix C ist zu schätzen, damit in den Kanälen die räumliche Trennbarkeit der Verbindungen beurteilt und durch geeignete Kanalzuteilung vorteilhaft beeinflußt werden kann.

Beim ersten Ausführungsbeispiel wird davon ausgegangen, daß sich eine Mobilstation MS für einen Verbindungsaufbau anmeldet, sie somit einen Signalisierungskanal allein nutzen kann. An der Antenneneinrichtung AE der Basisstation BS fällt zu jedem Zeitpunkt $t_n$, n=1..N, ein komplexer M x 1 Abtastvektor $x_n$ an, der nur vom Sendesignal der einen Mobilstation MS abhängt. Hinzu kommen Einflüsse von Gleichkanalstörungen und ein Rauschanteil.

Die innerhalb der Anmeldeprozedur gemessenen N Abtastvektoren (Schritt 1) werden ohne Veränderung der zeitlichen Reihenfolge in B aufeinanderfolgende Blöcke b = 1..B der Länge L eingeteilt, so daß gilt N = B x L. Durch Nebeneinanderstellen der jeweils L Vektoren eines Blocks lassen sich B komplexe M x L Empfangsmatrizen $X_1...X_B$ aufstellen (Schritt 2).

In einem dritten Schritt 3 wird ein Zeiger auf b = 0 gesetzt und dann bei jedem Durchlauf um eins erhöht. Die räumliche Kovarianzmatrix C wird vor dem ersten Durchlauf auf:

$$C = 1/L \cdot X_1 X_1^H \qquad (3)$$

voreingestellt.

Solange gilt: b <= B (Schritt 4) wird der fünfte Schritt 5 ausgeführt, der die Koavarianzmatrix C durch folgende Gleichung aktualisiert:

$$C = (1-\lambda)C + \lambda/L \cdot X_b X_b^H, \qquad (4)$$

dabei bezeichnet $\lambda$ einen Vergessensfaktor, der den Einfluß von zurückliegenden Blöcken auf den aktuell berechneten Wert der räumlichen Kovarianzmatrix C steuert.

Im sechsten Schritt 6 wird die bestimmte räumliche Kovarianzmatrix C ausgegeben und für eine Kanalzuweisung und ggf. spätere Berechnung des Gewichtsvektors w gespeichert.

Beim zweiten und dritten Ausführungsbeispiel wird angenommen, daß K Mobilstationen MS im gleichen Frequenzkanal mit der Basisstation BS kommunizieren. An der Antenneneinrichtung AE der Basisstation BS fällt zu jedem Zeitpunkt $t_n$, n=1..N ein komplexer M x 1 Abtastvektor $x_n$ an, der von deb Sendesignalen der K Mobilstationen MS, den Gleichkanalstörungen und dem Rauschanteil abhängt.

Es werden im folgenden zwei Verfahren zur Bestimmung von aktualisierten Schätzwerten für die räumlichen Kovarianzmatrizen $C_1$ bis $C_K$ der K Mobilstationen MS detailliert erläutert.

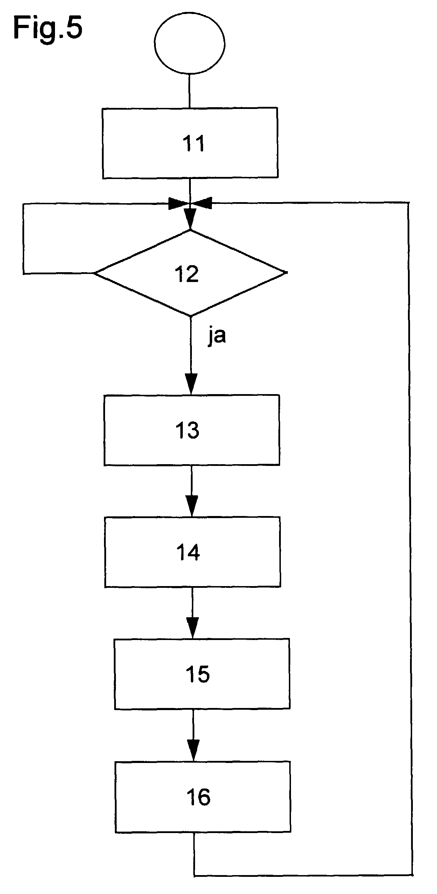

Das zweite Ausführungsbeispiel nach Fig. 5 beruht auf einer Bestimmung der räumlichen Kovarianzmatrizen C vor einer Datendetektion. In den Empfangssignalen enthaltene Trainingssequenzen als in der empfangenden Basisstation BS a-priori bekannte Daten werden ausgewertet. Die Trainingssequenzen sind in die übertragenen Nutzinformationen eingebettet. Es kann jedoch wie beim DS-CDMA Übertragungsverfahren auch ein durch einen individuellen Code gebildeter Pilotkanal ausgewertet werden.

Bei geeigneter Synchronisation der K Mobilstationen MS und endlicher Kanalgedächtnislänge läßt sich durch ein Nebeneinanderstellen von P während einer Trainingssequenz auftretender M x 1 Abtastvektoren eine M x P Empfangsmatrix

$$X = (x_1,..x_P) \qquad (5)$$

derart erzeugen, daß ein Gleichungssystem

$$X = HS + N \qquad (6)$$

erfüllt ist und neben den Einträgen der Empfangsmatrix X auch Einträge der (K · V) x P Signalmatrix

$$S = \begin{bmatrix} s_{1,C} & s_{1,2C-1} & \cdot\cdot & s_{1,P+C-1} \\ s_{1,1} & s_{1,C} & \cdot\cdot & s_{1,P} \\ s_{K,C} & s_{K,2C-1} & \cdot\cdot & s_{K,P+C-1} \\ s_{K,1} & s_{K,C} & \cdot\cdot & s_{K,P} \end{bmatrix} \qquad (7)$$

als gegeben angesehen werden können. Der Parameter P wird also derart gewählt, daß die Abtastwerte $s_{k,1}...s_{k,P+C-1}$ der von den Mobilstationen MS k=1..K produzierten Modulationssignale a-priori bekannt sind.

Die dimensionslose Variable V bezeichnet die auf den Kehrwert der Abtastrate normierte Länge des Kanalgedächtnisses. Die abgestastete Kanalimpulsantwort $h_{m,k}$ des Übertragungskanals zwischen dem Einzelstrahler m und der Mobilstation k besteht demnach aus V komplexen Abtastwerten (taps). Die M x (K · V) Kanalimpulsantwortmatrix H enthält die abgetasteten Kanalimpulsantworten der Kanäle zwischen allen M Einzelstrahlern und allen K Mobilstationen MS und läßt sich in K verbindungsindividuelle M x V Kanalimpulsantwortmatrizen $H_1..H_K$ aufteilen:

$$H = \begin{bmatrix} h_{1,1}^T & .. & h_{1,K}^T \\ .. & .. & .. \\ h_{M,1}^T & .. & h_{M,K}^T \end{bmatrix} = \begin{bmatrix} H_1 & .. & H_K \end{bmatrix}$$

$$(8)$$

Die Kanalimpulsantwortmatrix H und die M x P Rauschmatrix N aus (6) sind unbekannt. Sind jedoch die a-priori bekannten Modulationssignale so lang, daß $P \geq K \cdot V$ gilt, so stellt (6) in Bezug auf die Kanalimpuisantwortmatrix H ein überbestimmtes Gleichungssystem dar, so daß sich ein Schätzwert $\hat{H}$ für H im Sinne der Methode der kleinsten Quadrate (least square estimate) bestimmen läßt:

$$\hat{H}=XS^H(SS^H)^{-1}=XS^+ \tag{9}$$

Die Berechnung des Schätzwertes $\hat{H}$ kann in zeitkritischen Situationen auf eine Matrix-Matrix-Multiplikation reduziert werden, da die Matrix S a-priori bekannt ist und daher die Pseudo-Inverse $S^+$ vorab berechnet werden kann.
Nach Fig. 5 wird im Schritt 11 die a-priori bekannte Signalmatrix S aufgestellt und die Pseudo-Inverse $S^+=S^H(SS^H)^{-1}$ gebildet. Weiterhin wird der Vergessensfaktor $\lambda_k$ für $k=1..K$ mit $0\leq\lambda_k\leq1$ verbindungsindividuell ausge-wählt. Die räumlichen Kovarianzmatizen $C_k$ werden mit einem aus dem aktiven Betrieb oder aus der Phase vor der Kanalzuweisung stammenden Schätzwert voreingestellt. Steht kein geeigneter Wert zur Verfügung wird $C_k$ auf 0 gesetzt.
Im Schritt 12 wird abgefragt, ob ein neuer Empfangsblock zur Verfügung steht. Ist dies der Fall, wird in einem Schritt 13 aus dem neuen Empfangsblock die zu den a-priori bekannten Modulationssignalen der K Nutzer gehörigen Abtastvektoren extrahiert und die Empfangsmatrix X nach Gleichung (5) gebildet.
Im Schritt 14 werden die Schätzwerte $\hat{H}$ für die Kanalimpulsantwortmatrix H nach Gleichung (9) bestimmt und nach Gleichung (8) in verbindungsindividuelle Blöcke $H_1..H_K$ aufgeteilt.
Im Schritt 15 werden für alle Verbindungen $k=1..K$ nach folgender Gleichung:

$$C_k=(1-\lambda_k)C+\lambda_k/L \cdot H_k H_k^H, \tag{10}$$

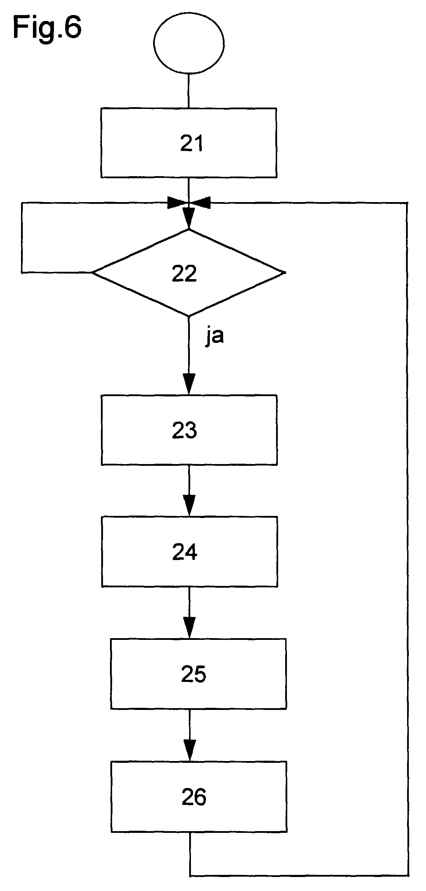

die räumlichen Kovarianzmatrizen C bestimmt, ggf. wird der Wert durch die Sendeleistung der Mobilstation dividiert, und im Schritt 16 zur Weiterverarbeitung ausgegeben.
Beim dritten Ausführungsbeispiel nach Fig. 6 wird angenommen, daß nach dem Empfang eines Datenblocks der Länge N ein beliebiges Detektionsverfahren Schätzwerte für die Abtastwerte $s_{k,1}...s_{k,N}$ der von den Mobilstationen MS gesendeten Modulationssignale zur Verfügung stellt. Mit Hilfe dieser Schätzwerte läßt sich ähnlich (6) ein lineares Gleichungssystem aufstellen:

$$X=HS+N \tag{11}$$

In diesem Fall enthält die M x N Empfangsmatrix

$$X=(x_1...x_N) \tag{12}$$

die zum entsprechenden Empfangsdatenblock gehörigen Abtastvektoren $x_1...x_N$, die M x N Rauschmatrix N, die in dem Empfangsdatenblock enthaltene Störungen, die Gleichkanalinterferenzen aus anderen Zellen, sowie das Empfängerrauschen beschreibt, und die $(K \cdot V)$ x N Signalmatrix S

$$S = \begin{bmatrix} s_{1,C} & s_{1,2C-1} & .. & s_{1,N+C-1} \\ s_{1,1} & s_{1,C} & .. & s_{1,N} \\ s_{K,C} & s_{K,2C-1} & .. & s_{K,N+C-1} \\ s_{K,1} & s_{K,C} & .. & s_{K,N} \end{bmatrix} . \qquad (13)$$

aller geschätzten Abtastwerte der verbindungsindividuellen Modulationssignale. Die M x (K • V) Kanalimpulsantwortmatrix H enthält wie (8) die abgetasteten Kanalimpulsantworten der Übertragungskanäle zwischen den M Einzelstrahlern und den K Mobilstationen MS und läßt sich in verbindungsindividuelle M x V Matrizen $H_1..H_K$ aufteilen.

Auch hier läßt sich eine Schätzung $\hat{H}$ für H im Sinne der kleinsten Quadrate durch die Lösung von Gleichung (11) herbeiführen. Im Gegensatz zum zweiten Ausführungsbeispiel sind die Einträge der Signalmatrix S jedoch nicht a-priori bekannt, so daß die Pseudo-Inverse S+ nicht off-line berechnet wird. Für diesen Fall ist es günstiger, Verfahren zur Lösung von Gleichung (11) einzusetzen, die ohne Matrixinversion auskommen.

Nach Fig. 6 wird im Schritt 21 der Vergessensfaktor $\lambda_k$ für k=1..K mit $0 \le \lambda_k \le 1$ verbindungsindividuell ausgewählt. Die räumlichen Kovarianzmatizen $C_k$ werden mit einem aus dem aktiven Betrieb oder aus der Phase vor der Kanalzuweisung stammenden Schätzwert voreingestellt. Steht kein geeigneter Wert zur Verfügung wird $C_k$ auf 0 gesetzt.

Im Schritt 22 wird abgefragt, ob ein neuer Empfangsblock zur Verfügung steht. Ist dies der Fall wird in einem Schritt 23 aus dem neuen Empfangsblock eine Empfangsmatrix X nach Gleichung (12) aus den zum Empfangsdatenblock gehörigen Abtastvektoren und die Signalmatrix S nach Gleichung (13) aus den Abtastwerten der detektierten Modulationssignale bestimmt.

Im Schritt 24 werden die Schätzwerte $\hat{H}$ für die Kanalimpulsantwortmatrix H nach Gleichung (11) im Sinne der Methode der kleinster Quadrate bestimmt. Besonders vorteilhaft sind hierfür die Methode der Normalengleichungen oder die Methode der schnellen Givens-Rotationen einzusetzen. Weitere günstige Alternativen sind eine QR-Zerlegung oder eine Berechnung der Pseudo-Inversen der Signalmatrix S. Die geschätzte Kanalimpulsantwortmatrix H wird nach Gleichung (8) in verbindungsindividuelle Blöcke $H_1..H_K$ aufgeteilt.

Im Schritt 25 werden für alle Verbindungen k=1..K nach der in Gleichung (10) gezeigten Formel die räumlichen Kovarianzmatrizen C bestimmt und im Schritt 26 zur Weiterverarbeitung ausgegeben.

Sind die Sendeleistungen in der Aufwärtsstrecke der Mobilstationen MS (bzw. entsprechende Schätzwerte) bekannt, ist es wiederum äußerst vorteilhaft, vor der Weiterverarbeitung den Schätzwert jeder räumlichen Kovarianzmatrix $C_k$ durch die Sendeleistung der entsprechenden Mobilstation k zu dividieren.

In einer weiteren vorteilhaften Ausgestaltung der Erfindung ist es vorgesehen, die Tatsache auszunützen, daß räumliche Kovarianzmatrizen per definitionem (s. Gleichung (2)) hermitsch sind, d.h. das sie durch die Operation der konjugiert komplexen Transposition in sich selbst übergehen. So ist es u.a. Teil der Erfindung, die offenbarten Verfahrenschritte zur Schätzung räumlicher Kovarianzmatrizen dadurch zu vereinfachen oder zu beschleunigen, daß nur die Elemente der linken oberen Hälfte der räumlichen Kovarianzmatrizen (einschließlich der Hauptdiagonalen) berechnet werden, da die Elemente der rechten unteren Hälfte durch Spiegelung an der Hauptdiagonalen nebst Vorzeicheninvertierung des Imaginärteils des gespiegelten Matrixeintrags erzeugt werden können. Aus ähnlichen Gründen kann der Speicherplatzbedarf zur Durchführung des erfindungsgemäßen Verfahrens dadurch reduziert werden, daß nur eine Hälfte der Einträge räumlicher Kovarianzmatrizen abgespeichert wird, wobei zusätzlich die stets reellwertigen Hauptdiagonalelemente nur in Form ihrer Realteile in einem Speicher abgelegt sein brauchen.

## Patentansprüche

1.  Verfahren zur Schätzung der räumlichen Kovarianzmatrix (C) des Übertragungskanals zwischen einer Zentralstation (BS) und mindestens einer Teilnehmerstation (MS) in Kommunikationssystemen,
    wobei die Zentralstation (BS) eine aus mehreren Einzelsensoren bestehende Antenneneinrichtung (AE) aufweist, bei dem

    in der Zentralstation (BS) zeitlich zusammengehörige komplexe Antennenabtastwerte der Einzelsensoren als Komponenten eines Empfangsvektors ($x_1$) aufgefaßt werden,
    zu den Antennenabtastwerten des gleichen Abtastzeitpunkts konjugiert komplexe Werte als Komponenten eines konjugiert komplex transponierten Empfangsvektors ($x_1^H$) aufgefaßt werden, und

durch die Mittelung der (L = 1,2,3) inneren Produkte einer vorbestimmten Anzahl (L = 1,2,3) von Empfangsvektoren ($x_1$..$x_L$) mit den jeweils entsprechenden konjugiert komplex transponierten Empfangsvektoren ($x_1^H$..$x_L^H$) ein Schätzwert (C) für die räumliche Kovarianzmatrix des Übertragungskanals bestimmt wird.

2. Verfahren nach Anspruch 1, bei dem

die Empfangsvektoren ($x_1$..$x_L$) Spaltenvektoren sind, die nebeneinander angeordnet eine Empfangsmatrix (X) ergeben, und die Mittelung der inneren Produkte der Empfangsvektoren ($x_1$..$x_L$) mit den entsprechenden konjugiert komplex transponierten Empfangsvektoren ($x_1^H$..$x_L^H$) durch die Multiplikation ($XX^H$) der Empfangsmatrix (X) mit ihrer konjugiert komplex Transponierten ($X^H$) mit nachfolgender Division durch die Anzahl (L = 1,2,3) der Empfangsvektoren geschieht.

3. Verfahren nach Anspruch 1, bei dem

der Schätzwert (C) für die räumliche Kovarianzmatrix durch eine Nullmatrix initialisiert wird,
für jeden Abtastzeitpunkt (l = 1..L) das innere Produkt des Empfangsvektors ($x_l$) und des entsprechenden konjugiert komplex transponierten Empfangsvektors ($x_l^H$) gebildet und auf den Schätzwert (C) für die räumliche Kovarianzmatrix aufaddiert wird, und
der Schätzwert (C) für die räumliche Kovarianzmatrix abschließend durch die Anzahl (L = 1,2,3..) der Empfangsvektoren dividiert wird.

4. Verfahren zur Schätzung teilnehmerspezifischer räumlicher Kovarianzmatrizen ($C_1$..$C_K$) von Übertragungskanälen zwischen einer Zentralstation (BS) und einer vorbestimmten Anzahl (K = 1,2,3) von Teilnehmerstationen (MS) in Kommunikationssystemen,
wobei die Zentralstation BS) eine aus mehreren (M = 2,3,4..) Einzelsensoren ($E_1$..$E_M$) bestehende Antenneneinrichtung (AE) aufweist,
bei dem

in der Zentralstation (BS) zeitlich zusammengehörige komplexe Antennenabtastwerte der Einzelsensoren als Komponenten eines Empfangsvektors ($x_1$) aufgefaßt werden,
mit Hilfe einer vorbestimmten Anzahl (L = 1,2,3) von Empfangsvektoren ($x_1$..$x_L$) die für eine bestimmte Teilnehmerstation (k) spezifischen Kanalimpulsantworten ($h_{k1}$..$h_{kM}$) der Übertragungsstrecken (Anzahl = M) zwischen der bestimmten Teilnehmerstation (k) und den Einzelsensoren ($E_1$..$E_M$) der Antenneneinrichtung (AE) bestimmt werden, und
sich das Element ($c_{kmn}$) in einer Spalte (m) und einer Zeile (n) des Schätzwerts ($C_k$) der für die bestimmte Teilnehmerstation (k) spezifischen räumlichen Kovarianzmatrix durch die Korrelation der zwei Kanalimpulsantworten ($h_{km}$, $h_{kn}$) ergibt, die den Kanälen zwischen der bestimmte Teilnehmerstation (k) und den zwei Einzelsensoren ($E_m$, $E_n$), die durch die Spaltennummer (m) und die Zeilennummer (n) spezifiziert sind, entsprechen.

5. Verfahren nach einem der vorherigen Ansprüche, bei dem die für die bestimmte Teilnehmerstation (k) spezifischen Kanalimpulsantworten ($h_{k1}$..$h_{kM}$) als zeitdiskrete Abtastsätze vorliegen,

die zeitdiskreten Abtastsätze als Zeilenvektoren aufgefaßt werden, die übereinander angeordnet eine für die bestimmte Teilnehmerstation (k) spezifische Kanalimpulsantwortmatrix ($H_k$) ergeben, und
sich der Schätzwert ($C_k$) der für die bestimmte Teilnehmerstation (k) spezifischen räumlichen Kovarianzmatrix durch die Multiplikation ($H_k H_k^H$) der für die bestimmte Teilnehmerstation (k) spezifischen Kanalimpulsantwortmatrix ($H_k$) mit ihrer konjugiert komplex Transponierten ($H_k^H$) ergibt.

6. Verfahren nach einem der vorherigen Ansprüche, bei dem der Schätzwert (C, $C_k$) der für die bestimmte Teilnehmerstation (k) spezifischen räumlichen Kovarianzmatrix durch die Sendeleistung der Teilnehmerstation (k) dividiert wird.

7. Verfahren nach einem der vorherigen Ansprüche, bei dem die Teilnehmerstationen (Anzahl = K) der Zentralstation (BS) a-priori bekannte Symbole aussenden, mit deren Hilfe die für die Teilnehmerstationen spezifischen Kanalimpulsantworten ($h_{11}$..$h_{1M}$ ,..,$h_{K1}$..$h_{KM}$) (Anzahl = K * M) gemeinsam ermittelt werden.

**8.** Verfahren nach einem der vorherigen Ansprüche, bei dem die Zentralstation (BS) mit Hilfe der Empfangsvektoren $(x_1..x_L)$ die von den Teilnehmerstationen (Anzahl = K) gesendeten Symbole detektiert, mit deren Hilfe wiederum die für die Teilnehmerstationen (Anzahl = K) spezifischen Kanalimpulsantworten $(h_{11}..h_{1M},..,h_{K1}..h_{KM})$ gemeinsam ermittelt werden.

**9.** Verfahren nach einem der vorherigen Ansprüche, bei dem die Anzahl (L) der zur Schätzung der teilnehmerspezifischen räumlichen Kovarianzmatrizen $(C_1..C_K)$ verwendeten Empfangsvektoren $(x_1^H..x_L^H)$ den Kanalübertragungsverhältnissen entsprechend einstellbar ist.

**10.** Verfahren nach einem der vorherigen Ansprüche, bei dem für eine vorbestimmte Anzahl (B = 1,2,3) von Schätzzeitpunkten für die bestimmte Teilnehmerstation (k) spezifische räumliche Kovarianzmatrizen $(C_1..C_B, C_{k1}..C_{kB})$ gebildet werden, und

ein verbesserter Schätzwert $(C, C_k)$ der für die bestimmte Teilnehmerstation (k) spezifischen räumlichen Kovarianzmatrix durch Mittelung der räumlichen Kovarianzmatrizen $(C_1..C_B, C_{k1}..C_{kB})$ erzeugt wird.

**11.** Verfahren nach Anspruch 10, bei dem die Anzahl (B) von Schätzzeitpunkten und/oder die Gewichtung der entsprechenden räumlichen Kovarianzmatrizen $(C_1..C_B)$ bei der Mittelung den Kanalübertragungsverhältnissen entsprechend einstellbar ist.

**12.** Verfahren nach einem der Ansprüche 10 oder 11, bei dem bei der Mittelung der räumlichen Kovarianzmatrizen $(C_{k1}..C_{kB}, C_1..C_B)$ die zeitlich früher erfolgten Antennenabtastungen den Schätzwert $(C, C_k)$ der der für die bestimmte Teilnehmerstation (k) spezifischen räumlichen Kovarianzmatrix weniger stark beeinflussen als die zeitlich später erfolgten Antennenabtastungen.

**13.** Verfahren nach Anspruch 12, bei dem die Mittelung der für die bestimmte Teilnehmerstation (k) spezifischen räumlichen Kovarianzmatrizen $(C_1..C_B, C_{k1}..C_{kB})$ mit Hilfe der Methode des expotentiellen Vergessens geschieht.

**14.** Verfahren nach Anspruch 13, bei dem ein Vergessensfaktor ($\lambda$) den Kanalübertragungsverhältnissen entsprechend einstellbar ist.

**15.** Einrichtung zur Schätzung räumlicher Parameter eines Übertragungskanals zwischen einer Zentralstation (BS) und mindestens einer Teilnehmerstation (MS) in Kommunikationssystemen, wobei der Einrichtung eine aus mehreren Einzelstrahlern bestehende Antenneneinrichtung (AE) zugeordnet ist, mit

- einer Speichereinrichtung (MEM), in der zeitlich zusammengehörige komplexe Antennenabtastwerte der Einzelsensoren als Komponenten eines Empfangsvektors $(x_1)$ gespeichert werden,
- einer Signalverarbeitungseinrichtung (SP), die zu den Antennenabtastwerten des gleichen Abtastzeitpunkts konjugiert komplexe Werte als Komponenten eines konjugiert komplex transponierten Empfangsvektors $(x_1^H)$ bildet, und durch die Mittelung der (L = 1,2,3) inneren Produkte einer vorbestimmten Anzahl (L = 1,2,3) von Empfangsvektoren $(x_1..x_L)$ mit den jeweils entsprechenden konjugiert komplex transponierten Empfangsvektoren $(x_1^H..x_L^H)$ ein Schätzwert (C) für die räumliche Kovarianzmatrix des Übertragungskanals bestimmt.

## Fig.1

## Fig.2

... M Einzelstrahler

## Fig.3

**Fig.4**

Fig.5

Fig.6

Europäisches
Patentamt

**EUROPÄISCHER RECHERCHENBERICHT**

Nummer der Anmeldung

EP 98 11 5094

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO 97 00543 A (WATKINS JOHNSON CO ;UNIV LELAND STANFORD JUNIOR (US)) 3. Januar 1997 * Zusammenfassung * * Seite 5, Zeile 6 - Zeile 16 * * Seite 9, Zeile 8 - Zeile 12 * * Seite 10, Zeile 4 - Zeile 6 * * Seite 11, Zeile 5 - Zeile 7 * * Seite 14, Zeile 26 - Zeile 28 * * Seite 22, Zeile 9 - Zeile 16 * * Seite 24, Zeile 2 - Zeile 21 * * Seite 30, Zeile 1 - Seite 31, Zeile 1 * * Seite 31, Zeile 22 - Zeile 24 * eqn. 3,4,9,10,12,13,14,15 --- | 1-15 | H04B7/08 H04B7/005 H01Q3/26 |
| P,X | FARSAKH C ET AL: "An SDMA system based on spatial covariances" VTC '98. 48TH IEEE VEHICULAR TECHNOLOGY CONFERENCE. PATHWAY TO A GLOBAL WIRELESS REVOLUTION (CAT. NO.98CH36151), VTC '98. 48TH IEEE VEHICULAR TECHNOLOGY CONFERENCE. PATHWAY TO A GLOBAL WIRELESS REVOLUTION, OTTAWA, ONT., CANADA, 18-21 MAY 1998, Seiten 1171-1175 vol.2, XP002089291 ISBN 0-7803-4320-4, 1998, New York, NY, USA, IEEE, USA * das ganze Dokument * --- | 1-5,7-14 | |
| D,A | DE 195 11 752 A (SIEMENS AG) 10. Oktober 1996 * Seite 3, Zeile 22 * * Seite 3, Zeile 57 - Zeile 61 * eqn. 2,3 --- -/-- | 1,2,4,9, 15 | |

RECHERCHIERTE SACHGEBIETE (Int.Cl.6)

H04B
H01Q

Der vorliegende Recherchenbericht wurde für alle Patentansprüche erstellt

| Recherchenort | Abschlußdatum der Recherche | Prüfer |
|---|---|---|
| DEN HAAG | 7. Januar 1999 | Sieben, S |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes
  Dokument

EPO FORM 1503 03.82 (P04C03)

**Europäisches Patentamt**

## EUROPÄISCHER RECHERCHENBERICHT

Nummer der Anmeldung

EP 98 11 5094

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 577 193 A (KIUCHI EIICHI ET AL) 18. März 1986<br>* Zusammenfassung *<br>* Abbildung 2 *<br>* Spalte 2, Zeile 9 – Zeile 15 *<br>* Spalte 2, Zeile 36 – Zeile 43 *<br>----- | 1,15 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 7. Januar 1999 | Sieben, S |

**ANHANG ZUM EUROPÄISCHEN RECHERCHENBERICHT**
**ÜBER DIE EUROPÄISCHE PATENTANMELDUNG NR.**

EP 98 11 5094

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-01-1999

| Im Recherchenbericht angeführtes Patentdokument | | Datum der Veröffentlichung | Mitglied(er) der Patentfamilie | | Datum der Veröffentlichung |
|---|---|---|---|---|---|
| WO 9700543 | A | 03-01-1997 | AU | 6034796 A | 15-01-1997 |
| | | | EP | 0832509 A | 01-04-1998 |
| DE 19511752 | A | 10-10-1996 | WO | 9630777 A | 03-10-1996 |
| | | | EP | 0817976 A | 14-01-1998 |
| | | | JP | 10505912 T | 09-06-1998 |
| US 4577193 | A | 18-03-1986 | JP | 1980900 C | 17-10-1995 |
| | | | JP | 6100647 B | 12-12-1994 |
| | | | JP | 60088375 A | 18-05-1985 |
| | | | EP | 0142293 A | 22-05-1985 |

FPO FORM P0461

Für nähere Einzelheiten zu diesem Anhang : siehe Amtsblatt des Europäischen Patentamts, Nr.12/82